# EUROPÄISCHE PATENTSCHRIFT

(11) **EP 0 996 559 B1**
(45) Veröffentlichungstag und Bekanntmachung des Hinweises auf die Patenterteilung: **06.03.2002**
(21) Anmeldenummer: 98937577.9
(22) Anmeldetag: 21.07.1998
(51) Int. Cl.: B60T 8/36, F16K 31/06

(54) **VENTILEINRICHTUNG**
VALVE ASSEMBLY
ENSEMBLE DE SOUPAPE

(30) Priorität: 22.07.1997 DE 19731417
(43) Veröffentlichungstag der Anmeldung: 03.05.2000
(73) Patentinhaber: Continental Teves AG & Co. oHG, 60488 Frankfurt am Main (DE)
(72) Erfinder: LINKENBACH, Steffen, D-65760 Eschborn (DE)
(86) Internationale Anmeldenummer: EP9804512
(87) Internationale Veröffentlichungsnummer: WO9905010

(56) Entgegenhaltungen:
- EP-A- 0 085 298
- CH-A- 679 327
- DE-A- 2 517 907
- DE-A- 2 815 735
- DE-A- 3 943 003
- US-A- 2 812 776
- US-A- 4 778 225
- US-A- 4 922 965
- US-A- 5 007 458

## Beschreibung

Die Erfindung betrifft eine Ventileinrichtung zum Steuern eines Differenzdruckes mit einem Gehäuse, einer Betätigungseinrichtung, einem ersten, einem zweiten sowie einem dritten Anschluß, einem ersten Dichtsitz, einem zweiten Dichtsitz sowie einem Ventilkörper, dessen Zusammenwirken mit dem ersten Dichtsitz eine erste Verbindung zwischen dem ersten und dem zweiten Anschluß steuert und dessen Zusammenwirken mit dem zweiten Dichtsitz eine zweite Verbindung zwischen dem zweiten und dem dritten Anschluß steuert, wobei die Betätigungseinrichtung den Ventilkörper oder die Dichtsitze antreibt, und wobei die Dichtsitze axial gegenüberliegend angeordnet sind und gleiche wirksame Durchmesser aufweisen und der Ventilkörper zwischen den Dichtsitzen derart angeordnet ist, daß er in Eingriff mit einem der Dichtsitze bringbar ist, während der andere Dichtsitz geschlossen bleibt

Eine derartige, vorzugsweise pneumatische Ventileinrichtung, die insbesondere bei der Verwendung einer Unterdruckquelle mit begrenzter Kapazität zum Einsatz kommt, ist aus der US-A-2,812,776 bekannt. Das darin offenbarte 3/3-Wegeventil weist zwei koaxial angeordnete Dichtsitze auf, die mit je einer Dichfläche eines Ventilkörpers zusammenwirken, der von einer Betätigungseinrichtung angetrieben wird. Sowohl der wirkungsmäßig zwischen dem ersten und dem zweiten Anschluß geschaltete erste Dichtsitz als auch der wirkungsmäßig zwischen dem zweiten und dem dritten Anschluß geschaltete zweite Dichtsitz der vorbekannten Ventileinrichtung sind durch Randbereiche von in einem Ventilgehäuse entsprechend gestalteten Bohrungen gebildet, die mit den pneumatischen Anschlüssen in Verbindung stehen.

Außerdem ist aus der EP-A1-0 085 298 ein Mehrwegeventil bekannt, dessen mittels eines Elektromagneten betätigbarer Ventilkörper durch zwei axial gegenüberliegenden Rollmembranen gebildet ist, die jeweils mit einem der Dichtsitze zusammenwirken.

Weniger vorteilhaft anzusehen ist bei den vorbekannten Ventileinrichtungen die von der Betätigungseinrichtung aufzubringende relativ hohe Betätigungskraft, die deren Regelbarkeit bzw. Dosierbarkeit negativ beeinflußt.

Es ist daher Aufgabe der vorliegenden Erfindung, eine Ventileinrichtung der eingangs genannten Gattung vorzuschlagen, die auf einem niedrigeren Niveau der von der Betätigungseinrichtung aufzubringenden Kraft arbeitet und deren Regelbarkeit bzw. Dosierbarkeit verbessert wird. Dabei soll die Ventileinrichtung in Serienfertigung leicht herstellbar sein und aus kostengünstig herstellbaren Einzelteilen bestehen, so daß aufwendige Fertigungsmaßnahmen weitgehend vermieden werden.

Die Aufgabe wird erfindungsgemäß dadurch gelöst, daß die Dichtsitze an im Gehäuse verschiebbaren, federnd vorgespannten Hülsen ausgebildet sind.

Vorteilhafte Weiterbildungen des Erfindungsgegenstandes sind den Unteransprüchen 2 bis 12 zu entnehmen.

Die Erfindung wird im folgenden an zwei Ausführungsbeispielen von Ventileinrichtungen näher erläutert, die als Steuerventile von pneumatischen, elektronisch ansteuerbaren Bremskraftverstärkern Verwendung finden können. In der Zeichnung zeigt:
- Fig. 1: schematisch einen Schnitt durch eine erste Ausführung der erfindungsgemäßen Ventileinrichtung in einem unbetätigten Zustand, und
- Fig. 2: eine zweite Ausführung der erfindungsgemäßen Ventileinrichtung in einer der Fig. 1 entsprechenden Darstellung.

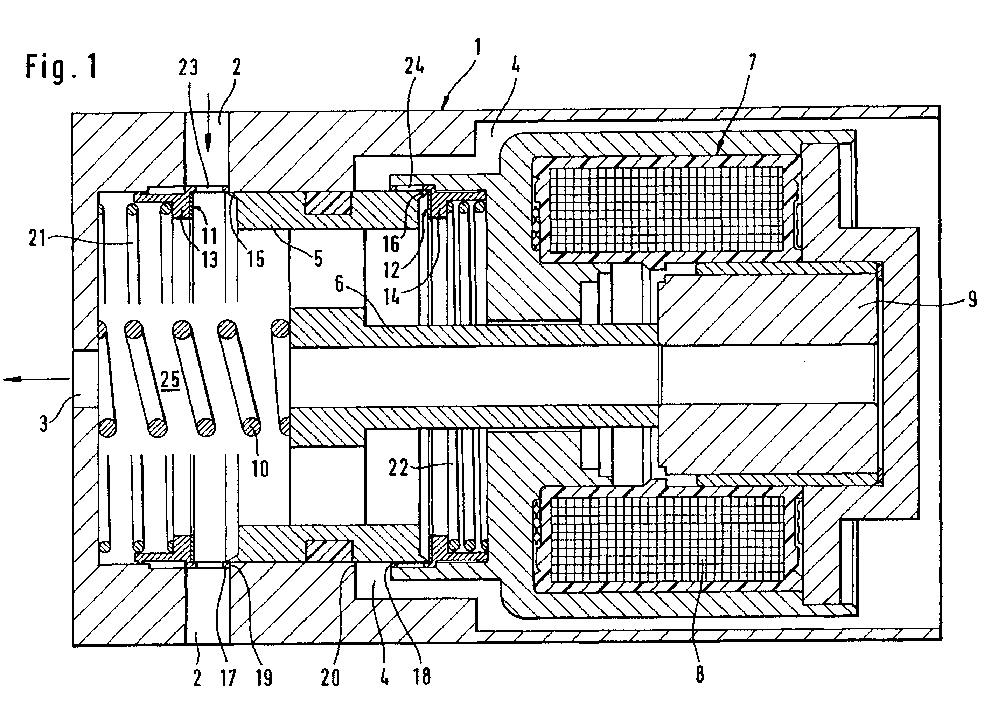

Die in der Fig. 1 schematisch dargestellte Ventileinrichtung eines elektronisch regelbaren Bremskraftverstärkers ist im wesentlichen rotationssymmetrisch ausgebildet und weist ein Gehäuse 1 auf, das mit einem ersten Anschluß 2, einem zweiten Anschluß 3 sowie einem dritten Anschluß 4 versehen ist. Der erste Anschluß 2 ist einer nicht gezeigten Unterdruckkammer des Bremskraftverstärkers zugeordnet, die an eine geeignete Unterdruckquelle angeschlossen ist, der zweite Anschluß 3 mündet in einer ebenso nicht gezeigten Arbeitskammer, während der dritte Anschluß 4 der Zufuhr der Umgebungsatmosphäre dient. Im Inneren des Gehäuses 1 ist ein tellerförmiger Ventilkörper 5 axial verschiebbar angeordnet, der mittels einer rohrförmigen Verlängerung 6 durch eine elektromagnetische Betätigungseinrichtung 7 betätigbar ist. Es ist jedoch auch eine Betätigungseinrichtung denkbar, die durch einen Schrittmotor gebildet ist.

Die elektromagnetische Betätigungseinrichtung 7 umfaßt eine Spule 8 sowie einen Anker 9, an dem die vorhin erwähnte Verlängerung 6 unter Vorspannung einer ersten Feder 10 anliegt. Der Ventilkörper 5 ist dabei zwischen einem ersten Dichtsitz 11-sowie einem zweiten Dichtsitz 12 angeordnet, die an je einer im Gehäuse 1 begrenzt verschiebbaren Hülse 13, 14 ausgebildet sind. Die beiden Dichsitze 11, 12 sind durch je eine Dichtfläche aus elastischem Werkstoff gebildet und wirken mit je einer am Ventilkörper 5 ausgebildeten vorzugsweise ringförmigen Dichtkante 15, 16 zusammen, wobei die Anordnung derart getroffen ist, daß die Dichtkanten 15, 16 den gleichen Durchmesser aufweisen. Die Hülsen 13, 14 sind mit je einem ringförmigen Kragen 17, 18 versehen, der an je einem im Gehäuse 1 ausgebildeten Anschlag 19, 20 zur Anlage bringbar ist. Eine axiale Vorspannung der Hülsen 13, 14 in Richtung auf den Anschlag 19, 20 zu wird von je einer Feder 21, 22 aufgebracht. Um die Strömungsverhälnisse sowohl beim Evakuieren als auch beim Belüften der an den zweiten Anschluß 3 angeschlossenen nicht gezeigten Arbeitskammer des Bremskraftverstärkers optimal zu gestalten sind in den Kragen Öffnugen 23, 24 vorgesehen.

In der in Fig. 1 gezeigten Ruhestellung der erfindungsgemäßen Ventileinrichtung bzw. bei unbetätigter elektromagnetischer Betätigungseinrichtung 7 liegt die erste Hülse 13 unter der Vorspannung der Feder 21 am Anschlag 19 an, d.h., in axialem Abstand von der Dichtkante 15, so daß zwischen dem ersten Anschluß 2 und dem zweiten Anschluß 3 eine pneumatische Verbindung besteht, die über den Innenraum 25 des Gehäuses 1 führt. Die zweite Dichtfläche liegt unter Vorspannung der zweiten Feder 22 an der ringförmigen Dichtkante 16 des Ventilkörpers 5 an, so daß der zweite Dichtsitz 12 und somit der dritte Anschluß 4 geschlossen sind.

Bei Beaufschlagung der Spule 8 mit elektrischem Strom wird auf den Anker 9 eine in der Zeichnung nach links gerichtete Kraft ausgeübt, die ein axiales Verschieben des Ventilkörpers 5 auf den ersten Dichtsitz 11 zu zur Folge hat. Der zweite Dichtsitz 12 folgt unter Vorspannung durch die Feder 22 der Bewegung des Ventilkörpers 5 so lange, bis der Kragen 18 der zweiten Hülse 14 am Anschlag 20 zur Anlage kommt. Bei einer weiteren Bewegung des Ventilkörpers 5 nach links kommt die Dichtkante 15 zur Anlage an der ersten Dichtfläche, so daß der erste Dichtsitz 11 geschlossen und die Verbindung zwischen dem ersten (2) und dem zweiten Anschluß 3 unterbrochen wird. Der Zustand, in dem beide Dichtsitze 11, 12 geschlossen sind, wird als "pneumatische Druckhaltephase" bezeichnet.

Bei einer Erhöhung des durch die Spule 8 fließenden Stromes wird die erste Hülse 13 gegen die Wirkung der Feder 21 nach links bewegt, wobei die zweite Dichtkante 16 vom zweiten Dichtsitz 12 abgehoben wird. Durch das Öffnen des zweiten Dichtsitzes 12 wird eine Verbindung zwischen dem zweiten (3) und dem dritten Anschluß 4 freigegeben, so daß eine Belüftung der vorhin erwähnten, nicht gezeigten Arbeitskammer des Bremskraftverstärkers stattfindet. Der Zustand der Druckerhöhung in der Arbeitskammer wird als "pneumatische Druckaufbauphase" bezeichnet.

Wird dagegen, ausgehend von der "Druckhaltephase", der der Spule 8 zugeführte Strom gesenkt, so werden der Anker 9 und somit der Ventilkörper 5 unter Wirkung der ersten Druckfeder 10 in der Zeichnung nach rechts bewegt. Bei dieser Bewegung wird die zweite Hülse 14 gegen die Wirkung der Feder 22 in die in Fig. 1 gezeigte Position verschoben, wobei die erste Dichtkante 15 von der ersten Dichtfläche abgehoben und der erste Dichtsitz 11 geöffnet wird. Dadurch wird die Verbindung zwischen den Anschlüssen 2 und 3 freigegeben, so daß eine Evakuierung der Arbeitskammer und somit eine Senkung des darin herrschenden Druckes stattfindet. Der Zustand der Drucksenkung in der Arbeitskammer wird als "pneumatische Druckabbauphase" bezeichnet.

Die auf den Anker 9 wirkende Magnetkraft ist eine Funktion des durch die Spule 8 fließenden Stromes. Durch Änderungen des der Spule 8 zugeführten Stromes kann die Position des Ankers 9 in der Axialrichtung der Ventileinrichtung eingestellt werden, so daß durch gezeilten Wechsel zwischen Aufbau-, Halte- und Abbauphase jeder gewünschte Druckverlauf eingestellt werden kann. Die Bestromung der Spule 8 kann durch geeignete Signale erfolgen, die von einer nicht dargestellten elektrischen Steuereinheit erzeugt werden.

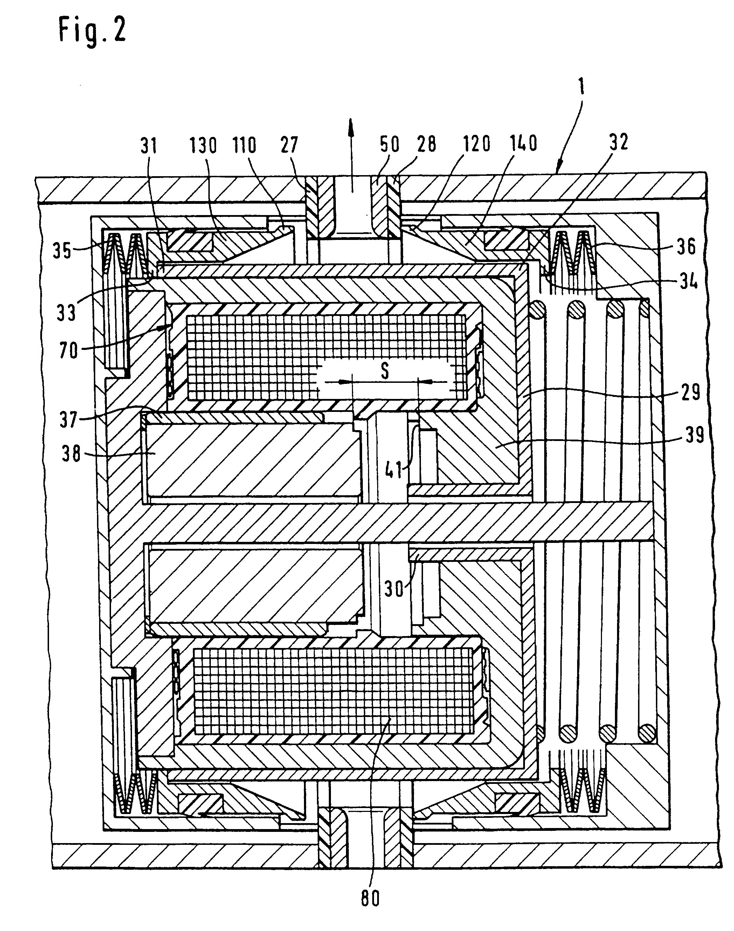

Bei der in Fig. 2 gezeigten zweiten Ausführungsvariante des Erfindungsgegenstandes ist der Ventilkörper 50 ortsfest im Ventilgehäuse 1 angeordnet und weist zwei gegenüberliegende Dichtflächen 27, 28 auf, die mit den vorhin erwähnten Dichtsitzen zusammenwirken, die in Fig. 2 mit den Bezugszeichen 110, 120 versehen sind. Die Betätigung der in Fig. 2 dargestellten Ventileinrichtung erfolgt mittels eines topfförmig ausgestalteten Betätigungselementes 29, das einerseits mit dem Anker 38 der elektromagnetischen Betätigungseinrichtung 70 in Eingriff bringbar ist und andererseits mit den die Dichtsitze 110, 120 bildenden Hülsen 130, 140 im Sinne deren axialer Verstellung gegenüber dem feststehenden Ventilkörper 50 zusammenwirkt. Die Kraftübertragung zwischen dem Anker 38 und dem Betätigungselement 29 erfolgt mittels eines rohrförmigen, radial innenliegend ausgebildeten axialen Fortsatzes 30, der sich im axialem Abstand vom Anker 38 befindet. Durch Änderungen des Abstandes zwischen Anker 38 und Fortsatz 30 kann das gewünschte, im Betrieb der erfindungsgemäßen Ventileinrichtung benötigte Magnetkraftniveau eingestellt werden. Die Kraftübertragung zwischen dem Betätigungselement 29 und den Hülsen 130, 140 erfolgt über radial außenliegende Bereiche 31, 32 des Betätigungselementes 29, die mit je einem an der Hülse 130 bzw. 140 ausgebildeten, radial nach innen gerichteten Kragen 33, 34, wobei die für eine einwandfreie Funktion erforderliche Vorspannung der Hülsen 130, 140 in Richtung auf den Ventilkörper 50 zu von Federn bzw. Tellerfederpaketen 35, 36 aufgebracht wird. Die Auslegung der Teile 130, 140 und 50 ist dabei vorzugsweise derart getroffen, daß in der Ruhestellung der erste Dichtsitz 110 an der Hülse 130 durch Anlage ihres Kragens 33 am Betätigungselement 29 bzw. 31 in axialem Abstand vom Ventilkörper 50 gehalten wird, während der zweite Dichsitz 120 durch die vorhin erwähnte Vorspannung der zweiten Hülse 140 am Ventilkörper 50 dichtend anliegt, wobei sich der radiale Kragen 34 der zweiten Hülse 140 außer Eingriff mit dem Betätigungselement 29 bzw. 32 befindet.

Der Anker 38 der in Fig. 2 gezeigten Ausführung ist dabei vorzugsweise in einer Lager- bzw. Gleitbuchse 37 gelagert, deren axiale Baulänge kleiner ist als die des Ankers 38. Der Anker 38 wirkt mit einem Anschlag 41 zusammen, wobei der Abstand zwischen dem in der Zeichnung rechts gezeigten Ankerende und dem Anschlag 41 dem Betätigungsweg S des Ankers 38 entspricht.

## Patentansprüche

1. Ventileinrichtung zum Steuern eines Differenzdruckes mit einem Gehäuse (1), einer Betätigungseinrichtung (7,70), einem ersten, einem zweiten sowie einem dritten Anschluß (2,3,4), einem ersten Dichtsitz (11,110), einem zweiten Dichtsitz (12,120) sowie einem Ventilkörper (5,50), dessen Zusammenwirken mit dem ersten Dichtsitz (11,110) eine erste Verbindung zwischen dem ersten (2) und dem zweiten Anschluß (3) steuert und dessen Zusammenwirken mit dem zweiten Dichtsitz (12,120) eine zweite Verbindung zwischen dem zweiten (3) und dem dritten Anschluß (4) steuert, wobei die Betätigungseinrichtung (7,70) den Ventilkörper (5,50) oder die Dichtsitze (11,12,110,120) antreibt, und wobei die Dichtsitze (11,12,110,120) axial gegenüberliegend angeordnet sind und gleiche wirksame Durchmesser aufweisen und der Ventilkörper (5,50) zwischen den Dichtsitzen (11,12,110,120) derart angeordnet ist, daß er in Eingriff mit einem (11) der Dichtsitze (11,12) bringbar ist, während der andere Dichtsitz (12) geschlossen bleibt, **dadurch gekennzeichnet, daß** die Dichtsitze (11,12,110,120) an im Gehäuse (1) verschiebbaren, federnd vorgespannten Hülsen (13,14,130, 140) ausgebildet sind.

2. Ventileinrichtung nach Anspruch 1 **dadurch gekennzeichnet, daß** die Betätigungsenrichtung (7,70) durch einen Elektromagneten (8,9,80,38) gebildet ist.

3. Ventileinrichtung nach Anspruch 1 **dadurch gekennzeichnet, daß** die Betätigungseinrichtung durch einen Schrittmotor gebildet ist.

4. Ventileinrichtung nach Anspruch 1 oder 2 **dadurch gekennzeichnet, daß** der Ventilkörper (50) ortsfest angeordnet ist und daß die Betätigung der Ventileinrichtung durch Zusammenwirken der Betätigungseinrichtung (70) im Sinne des Eingriffs der Dichtsitze (110,120) mit dem Ventilkörper (50) erfolgt.

5. Ventileinrichtung nach Anspruch 4 **dadurch gekennzeichnet, daß** die Dichtsitze (110,120) nacheinander betätigbar sind.

6. Ventileinrichtung nach Anspruch 1 **dadurch gekennzeichnet, daß** der Ventilkörper (5) axial verstellbar angeordnet ist und daß die Betätigung der Ventileinrichtung durch Zusammenwirken der Betätigungseinrichtung (7) im Sinne des Eingriffs des Ventilkörpers (5) mit den Dichtsitzen (11,12) erfolgt.

7. Ventileinrichtung nach Anspruch 1 **dadurch gekennzeichnet, daß** die Hülsen (13,14) mit je einem im Gehäuse (1) ausgebildeten Anschlag (19,20) zusammenwirken.

8. Ventileinrichtung nach Anspruch 4 **dadurch gekennzeichnet, daß** der Ventilkörper (50) ringförmig ausgebildet ist und je eine dem ersten (110) bzw. dem zweiten Dichtsitz (120) zugeordnete Dichtfläche (27,28) aufweist.

9. Ventileinrichtung nach Anspruch 8 **dadurch gekennzeichnet, daß** die Ventileinrichtung eine pneumatische Ventileinrichtung ist, deren Ventilkörper (50) als Teil eines (3) der pneumatischen Anschlüsse (2,3,4,) ausgebildet ist.

10. Ventileinrichtung nach Anspruch 1 oder 6 **dadurch gekennzeichnet, daß** die Dichtsitze (11,12) durch Dichtflächen gebildet sind, die mit am Ventilkörper (5) ausgebildeten Dichtkanten (15,16) zusammenwirken.

11. Ventileinrichtung nach Anspruch 2 **dadurch gekennzeichnet, daß** der Anker (38) des Elektromagneten (70) in einer Lager- bzw. Gleitbuchse (37) gelagert ist.

12. Ventileinrichtung nach Anspruch 2 **dadurch gekennzeichnet, daß** der Anker (38) mit einem Anschlag (41) zusammenwirkt.

## Claims

1. Valve assembly for controlling a differential pressure, including a housing (1), an actuating device (7, 70), a first, a second, and a third port (2, 3, 4), a first sealing seat (11, 110), a second sealing seat (12, 120) and a valve member (5, 50) whose interaction with the first sealing seat (11, 110) controls a first connection between the first (2) and the second port (3), and whose interaction with the second sealing seat (12, 120) controls a second connection between the second (3) and the third port (4), wherein the sealing seats (11, 12, 110, 120) are arranged axially opposite each other and have equal effective diameters, and the valve member (5, 50) is arranged between the sealing seats (11, 12, 110, 120) so as to be movable into engagement with one (11) of the sealing seats (11, 12), while the other sealing seat (12) remains closed,
**characterized in that** the sealing seats (11, 12, 110, 120) are designed on resiliently biassed sleeves (13, 14, 130, 140) which are slidable in the housing (1).

2. Valve assembly as claimed in claim 1,
**characterized in that** the actuating device (7, 70) is configured as an electromagnet (8, 9, 80, 38).

3. Valve assembly as claimed in claim 1,
**characterized in that** the actuating device is configured as a stepping motor.

4. Valve assembly as claimed in claim 1 or claim 2,
**characterized in that** the valve member (50) is stationarily arranged, and **in that** the valve assembly is actuated by interaction of the actuating device (70) to the effect of engagement of the sealing seats (110, 120) with the valve member (50).

5. Valve assembly as claimed in claim 4,
**characterized in that** the sealing seats (110, 120) are operable one after the other.

6. Valve assembly as claimed in claim 1,
**characterized in that** the valve member (5) is arranged so as to be axially adjustable, and **in that** the valve assembly is actuated by interaction of the actuating device (7) to the effect of engagement of the valve member (5) with the sealing seats (11, 12).

7. Valve assembly as claimed in claim 1,
**characterized in that** the sleeves (13, 14) cooperate with each one stop (19, 20) designed in the housing (1).

8. Valve assembly as claimed in claim 4,
**characterized in that** the valve member (50) has an annular design and includes each one sealing surface (27, 28) respectively associated with the first (110) and the second sealing seat (120).

9. Valve assembly as claimed in claim 8,
**characterized in that** the valve assembly is a pneumatic valve assembly whose valve member (50) is configured as part of one (3) of the pneumatic ports (2, 3, 4).

10. Valve assembly as claimed in claim 1 or claim 6,
**characterized in that** the sealing seats (11, 12) are configured as sealing surfaces which cooperate with sealing edges (15, 16) on the valve member (5).

11. Valve assembly as claimed in claim 2,
**characterized in that** the armature (38) of the electromagnet (70) is supported in a bearing bush or slide bush (37).

12. Valve assembly as claimed in claim 2,
**characterized in that** the armature (38) cooperates with a stop (41).

## Revendications

1. Dispositif de valve permettant de commander une pression différentielle, comprenant un boîtier (1), un dispositif d'actionnement (7, 70), un premier, un deuxième et un troisième raccords (2, 3, 4), un premier siège d'étanchéité (11, 110), un second siège d'étanchéité (12, 120) et un obturateur de valve (5, 50), dont la coopération avec le premier siège d'étanchéité (11, 110) commande une première liaison entre le premier raccord (2) et le deuxième raccord (3) et dont la coopération avec le second siège d'étanchéité (12, 120) commande une seconde liaison entre le deuxième raccord (3) et le troisième raccord (4), le dispositif d'actionnement (7, 70) entraînant l'obturateur de valve (5, 50) ou les sièges d'étanchéité (11, 12, 110, 120), tandis que les sièges d'étanchéité (11, 12, 110, 120) sont disposés de façon à se faire face axialement et ont des diamètres effectifs égaux et l'obturateur de valve (5, 50) est disposé entre les sièges d'étanchéité (11, 12, 110, 120) d'une manière telle qu'il peut être amené en prise avec l'un (11) des sièges d'étanchéité (11, 12), alors que l'autre siège d'étanchéité (12) reste fermé,
**caractérisé en ce que** les sièges d'étanchéité (11, 12, 110, 120) sont réalisés sur des manchons (13, 14, 130, 140) qui peuvent être déplacés en translation dans le boîtier (1) et qui sont soumis à une précontrainte élastique.

2. Dispositif de valve suivant la revendication 1, **caractérisé en ce que** le dispositif d'actionnement (7, 70) est constitué d'un électro-aimant (8, 9, 80, 38).

3. Dispositif de valve suivant la revendication 1, **caractérisé en ce que** le dispositif d'actionnement est constitué d'un moteur pas à pas.

4. Dispositif de valve suivant la revendication 1 ou 2, **caractérisé en ce que** le corps de valve (50) est disposé d'une manière fixe et **en ce que** l'actionnement du dispositif de valve a lieu au moyen d'une coopération du dispositif d'actionnement (70) en vue de la venue en prise des sièges d'étanchéité (110, 120) avec l'obturateur de valve (50).

5. Dispositif de valve suivant la revendication 4, **caractérisé en ce que** les sièges d'étanchéité (110, 120) peuvent être actionnés l'un après l'autre.

6. Dispositif de valve suivant la revendication 1, **caractérisé en ce que** le corps de valve (5) est disposé d'une manière déplaçable axialement et **en ce que** l'actionnement du dispositif de valve a lieu au moyen d'une coopération du dispositif d'actionnement (7) en vue de la venue en prise de l'obturateur de valve (5) avec les sièges d'étanchéité (11, 12).

7. Dispositif de valve suivant la revendication 1, **caractérisé en ce que** les manchons (13, 14) coopèrent chacun avec une butée (19, 20) respective réalisée dans le boîtier (1).

8. Dispositif de valve suivant la revendication 4, **caractérisé en ce que** l'obturateur de valve (50) est réalisé avec une forme annulaire et comporte, pour chacun des premier (110) et second (120) sièges d'étanchéité, une surface d'étanchéité (27, 28) respective associée à celui-ci.

9. Dispositif de valve suivant la revendication 8, **caractérisé en ce que** le dispositif de valve est un dispositif de valve pneumatique dont l'obturateur de valve (50) est réalisé en tant que partie de l'un (3) des raccords pneumatiques (2, 3, 4).

10. Dispositif de valve suivant la revendication 1 ou 6, **caractérisé en ce que** les sièges d'étanchéité (11, 12) sont formés par des surfaces d'étanchéité qui coopèrent avec des arêtes d'étanchéité (15, 16) réalisées sur l'obturateur de valve (5).

11. Dispositif de valve suivant la revendication 2, **caractérisé en ce que** l'armature mobile (38) de l'électro-aimant (70) est montée dans une douille de palier ou douille de glissement (37).

12. Dispositif de valve suivant la revendication 2, **caractérisé en ce que** l'armature mobile (38) coopère avec une butée (41).
